# EUROPEAN PATENT SPECIFICATION

(11) **EP 3 320 323 B1**
(45) Date of publication and mention of the grant of the patent: **25.06.2025**
(21) Application number: 16744655.8
(22) Date of filing: 27.05.2016
(51) Int. Cl.: G01N 3/06, G01N 3/30

(54) **APPARATUS FOR SCANNING DEVELOPMENT OF DEFORMATIONS DURING IMPACT TESTS**
VORRICHTUNG ZUM SCANNEN DER ENTWICKLUNG VON DEFORMATIONEN WÄHREND SCHLAGPRÜFUNGEN
APPAREIL DE BALAYAGE DU DÉVELOPPEMENT DE DÉFORMATIONS PENDANT DES ESSAIS DE CHOC

(30) Priority: 02.06.2015 CZ 20150372
(43) Date of publication of application: 16.05.2018
(73) Proprietor: Tomas Bata University In Zlín, 76001 Zlín (CZ)
(72) Inventor: MALOCH, Jaroslav, 60200 Brno (CZ); MANAS, Miroslav, deceased (CZ); STANEK, Michal, 76001 Zlin (CZ); MANAS, David, 76001 Zlin (CZ); STOKLASEK, Pavel, 76302 Zlin (CZ)
(74) Representative: Kreizlova, Dana
(86) International application number: PCT/CZ2016/050016
(87) International publication number: WO 2016/192696

(56) References cited:
- JP-A- 2009 092 644
- US-A- 4 945 490
- US-A1- 2008 282 767
- LIANG XUE ET AL: "Dynamic Analysis of Thin Glass Under Ball Drop Impact With New Metrics", VOLUME 1: ADVANCED PACKAGING; EMERGING TECHNOLOGIES; MODELING AND SIMULATION; MULTI-PHYSICS BASED RELIABILITY; MEMS AND NEMS; MATERIALS AND PROCESSES, 16 July 2013 (2013-07-16), XP055308948, ISBN: 978-0-7918-5575-1, DOI: 10.1115/IPACK2013-73291

## Description

### The Technical Field

This invention relates to the device for the scanning of the deformation process in the course of Impact Shock Tests where the Impact Hammer or Drop Hammer falls on the face of the test specimen.

### Current Technical State

In the Testing field, various types of (Impact) Shock Tests are often used, which provide information on a material's resistance to impact/shock loads. In many cases, the result of such a test leads merely to a statement that the material meets the defined impact shock load - or not. Newer devices however, also provide information about what kind of strength - or energy, must be invested in the destruction of the specimen produced from the test material, and also provide a record of these measurements. These, so called - "Instrumented Tests" are a great step forward, and provide a considerable amount of useful information for assessing the shock test as realised as well as for describing its properties.

The Charpy or Izod Impact Hammer or Drop Hammer test devices are the most commonly used devices used for shock testing. Impact hammers enable one to perform Bending or Tensile Impact tests, by measuring the energy required to deform or rupture the test specimen by the shock effect of such devices. The Drop Hammer test provides information about the energy required to rupture or deform the test plates by the energy of the Drop Hammer. For both these devices, the actual test runs take place very quickly, making it difficult to observe the course of the destruction/deformation process, and particularly, the observation of the specimen's destruction.

Visualisation of the course of these tests is extremely important for the description of the behaviour of the tested material. It enables one to see the origin/emergence of a rupture, the crack propagation process, and the eventual destruction of the material - including a description of the shapes and sizes of the resulting fragments. These findings may be absolutely crucial in terms of the use of test materials in various industrial applications; e. g. for its possible use in transport resources, for the design and manufacture of protective equipment, etc.

In order to be able to capture (crack origin, formation and propagation) during the impact tests, it may be advantageous to use a high-speed scanning camera. In technical practice, several currently well-known solutions exist for the resolution of the scanning of these fast event processes using high-speed camera systems; e. g. European Patent Application EP 1762836 (A1) solves the scanning the course of Impact Hammer tests. The acquisition of images of such ruptures is by a refractive TV camera, where these images are subsequently processed and an evaluation of the type of fracture is also described in Japanese Patent Applications 61155724 JPS (A) and JPS 6,396,536 (A). These solutions however, are focused solely on the Charpy and Izod Impact Test Methods. US2008/282767 discloses another device for impact testing using a high-speed scanning camera.

The great problem with these well-known solutions is however, the lack of sufficient safe space suitable for such placement of the camera to be able to record the course of a test with sufficient information capability. The absolute absence of suitable space for taking scanning measurements is, for example, for current test devices' construction and structure for Drop Hammer testing devices. In addition, the use of high-speed cameras also requires excellent lighting conditions. The location of light sources of sufficient illumination intensity is, therefore, another limiting factor for the scanning and recording of events by a high-speed camera.

Another danger then, is possible damage to the technical devices by flying particles from the test body. The result of the culmination of the above problems is the fact that - with a Drop Hammer impact test there is no known suitable scanning system; and the aforementioned Charpy and Izod impact test scanning systems have a number of drawbacks and limitations.

### The Substance of this Invention

In order to be able to overcome these drawbacks, the invention of the proposed scanning devices contributes to registering events during deformation in the course of impact tests and the invention's apparatus for implementing such scanning and recording results. The substance of the invention lies in the fact that the specimen is illuminated, and the deformation - or, respectively, the destruction of its obverse surface during course of the impact of an impact hammer or drop hammer is captured by the high-speed camera system and, these images are subsequently optimised by use of Post-processing Methods.

In course of post-processing, its advantage is that it improves the representation abilities of the images from the perspective of evaluating crack origins and adjusts their parameters - in particular the brightness, contrast and gamma curve. To further highlight the detail of the visualisation of the textures of cracks, the exposed black and white images may be further be assigned false colours - so-called "Pseudo-colours".

Scanning deformations, or respectively, the destruction of a test body takes place preferably under scanning speed rates exceeding 500 frames per second.

The illumination intensity of the test body may be constant - or controlled, depending on the scanning rate in pulse-mode, in synchronisation with the camera frame rate.

The recorded high-speed camera system images can also be advantageously linked to the records taken during of the test of parameters monitored by the measuring device itself.

A device according to the invention comprises a measuring head 1 where any tested body 2 shall be fixed to the upper surface thereof above a vertical central channel 1a of the measuring head 1, in area of impact of an impact/drop hammer 3. Illumination channels 5 are located in the walls of the measuring head 1 and under the upper surface of the measuring head 1 and directed toward the central channel 1a, and wherein either light sources 4 or light-guides from externally mounted light sources are arranged. Moreover, an observation channel 1b enters in the central channel 1a into the illuminated space so that an angle α is formed between the axis of the observation channel 1b and the axis of the central channel 1a. In the space under the illumination channels 5, against an outlet of the observation channel 1b into the central channel 1a, an obliquely placed mirror 7 is located, the upper reflective surface of which is oriented such that an axis perpendicular to such reflective surface forms an angle with the axis of the observation channel 1b and the axis of the central channel 1a which correspond to half of said angle α. A high-speed camera 8 is mounted outside the measuring head 1 on a stand 9 (for example a tripod) along the axis of the observation channel 1b, where the said high-speed camera 8 is configured for scanning purposes.

Above the mirror 7, in the cavity of the central channel 1a, advantageously can be located a transparent protective shield 10.

A holder 14 for the mirror 7 can be advantageously mounted on a support rod 16 with adjustment elements 17 as means for positioning the mirror 7, particularly for the displacement of the mirror 7 in accordance with the axial direction of the observation channel 1b and rotation of the mirror 7 around the axis of the observation channel 1b.

The measuring head 1 can be advantageously provided with an inspection opening 6 for cleaning the space above the protective shield 10.

The device may also be advantageously supplemented by a rectification system for setting up of the optical axis of the high-speed camera 8 into the axis of the observation channel 1b, whereby, this rectification system is composed of the rectification light source 18 with its bracket 19 for temporary insertion into the cavity of the observation channel 1b, and an auxiliary bracket 23 for temporary attachment to a stand 9 instead of the high-speed camera 8. A pair of targets is located on this auxiliary bracket 23, containing three-axis head capable of scanning and tilting. The first target 21 being situated on the proximal end of the auxiliary bracket 23 is provided with an opening at a height corresponding to the height of the optical axis of the high-speed camera 8 and the second target 24 placed at the distal end of the auxiliary bracket 23 is then marked at a height corresponding to the height of the optical axis of the high-speed camera 8.

### Clarification of the Design Drawings

The accompanying drawings serve to more closely illustrate the essence of the invention:
Fig. 1 - The overall arrangement of the device for scanning the course of deformations in impact tests as embodied by the drop hammer device
Fig. 2 - A representation of the deformation of the tested body caused by the drop hammer
Fig. 3 - A depiction of crack initiation and expansion up until total destruction of the tested body during testing on black-and-white pictures taken by the high-speed camera system
Fig. 4 - A representation of cracks' textures after conversion of the black-and-white images into "fake/false" (pseudo colour) with different backgrounds
Fig. 5 - A record of the dependence of the affecting force of the drop hammer over time; or respectively, movements (caused) by instrumented impact tests
Fig. 6 - The arrangement of the rectification system
Fig. 7 - Detail of the mirror location used to capture events

### Example of the Realisation of the Invention

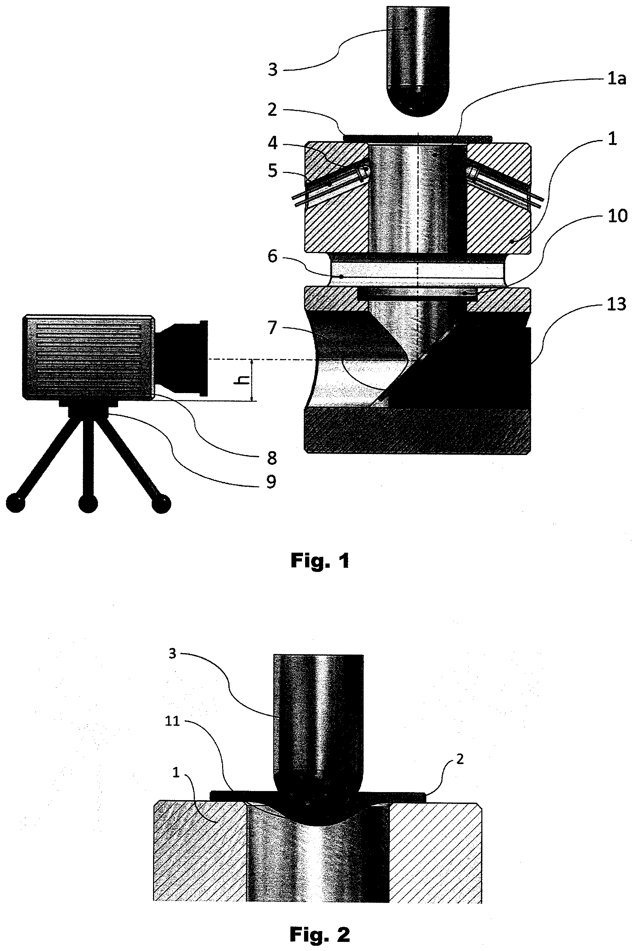

In this exemplary embodiment of the device for scanning the course of during deformations during drop hammer impact tests (see Fig. 1); a high-speed camera 8 is mounted on a stand 9 (made as a tripod) outside the test device itself. This solution eliminates influencing of impact recordings as well as vibrations accompanying the test itself. The tested body 2 is fixed on the upper surface of the measuring head 1 above the vertical central channel 1a of the measuring head 1 and, during the test itself, reflects the effect of the drop hammer 3. The course of the test is indirectly scanned by a high-speed camera 8, through the mirror 7. The mirror 7 is protected from damage from test material debris by a protective shield 10, made of a transparent material, the said protective shield 10 is fixed in the space above the mirror 7. Fragments of the test material, and eventually, other possible impurities, may be removed from the inner space above the protective shield 10 either mechanically, or by blowing through the inspection opening 6.

The lighting of the scanned space is ensured by light sources 4 from an illumination channel 5 created in the walls of the measuring head 1 and directed towards the vertical central channel 1a. The lighting can be realized advantageously as a controlled or uncontrolled LED source, internally placed or from outside through vented light-guides by fibre optic cables. The light sources 4 are positioned in multiple locations around the circumference of the measuring head 1, so as to ensure the requisite intensity and uniformity of illumination of the scanned field. The light sources can be controlled and modified, so as to radiate either with constant intensity during the entire test recording, or to operate in the pulse mode, synchronized with the camera's frame rate. During the test, the tested body 2, influenced by the impact/drop hammer 3 is deformed into the shape of a canopy 11, or respectively, the formation of brittle fractures ensues without visible deformation (see Fig. 2).

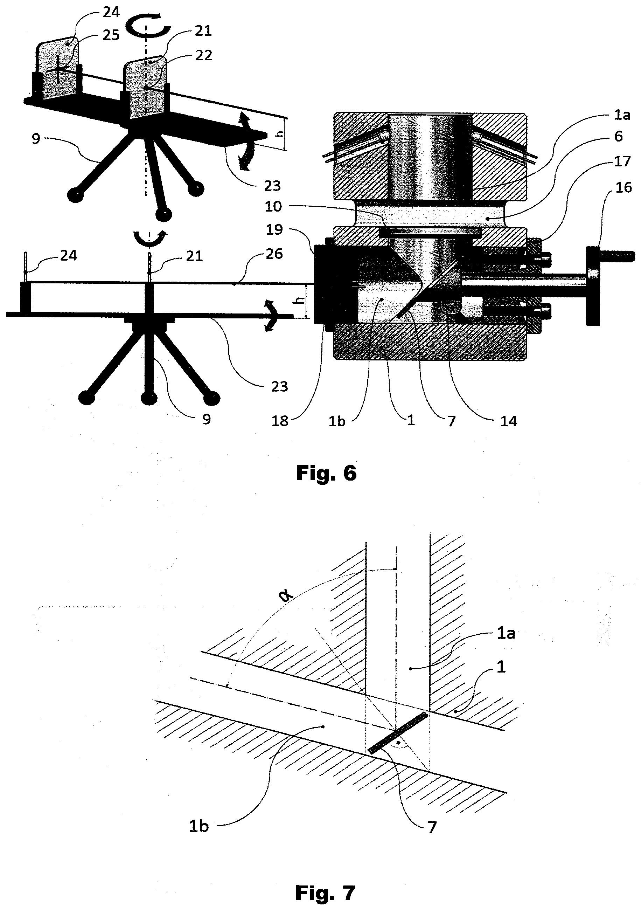

The measuring head 1 is - unlike currently-used solutions, specifically adapted with a view to the new measurement requirements. The new construction solution must enable the positioning and fixing of the mirror 7 (see Fig. 7), with the possibility of altering its position and easy access to exchange and alter the mirror 7 - including easy setting of the mirror and high-speed camera 8 to the optical axis. The upper reflective surface of the mirror 7 is oriented perpendicularly to the axis of the angle α formed between the axis of the observation channel 1b and the axis of central channel 1a. The high-speed camera 8 is then sited outside the measuring head 1 lateral axis viewing observation channel 1b and fixed to the stand 9 which is made as a tripod here. The wall of the measuring head 1 is provided with the means for positioning the mirror 7 relative to its displacement in the axial direction of the observation channel 1b, and its rotating around the axis of the observation channel 1b, where a holder 14 for the mirror 7 is mounted on a support rod 16 with adjustment elements 17.

The rectifying system shown in Fig. 6 is formed by the rectifying light source 18, which allows the location of an auxiliary bracket 23 to a position such that the optical axis of the scanning device - high-speed camera 8, after its fixation to stand 9 (tripod) along the optical axis of the measurement. It can be advantageously used for the setting up of optical measurement axis. The rectifying light source 18 during rectification is temporary sited in a bracket 19, fixed to the inlet in the observation channel 1b of the measuring head 1 instead of the high-speed camera 8. The setting of the auxiliary bracket 23 to a position that provides the high-speed camera 8 mounted along the optical measurement axis, allows the assembly of two targets - mounted on the auxiliary bracket 23.

The first target 21, sited along the vertical axis of the stand 9 - made as a tripod here, is provided with an opening 22 corresponding to the height h of the optical axis of the high-speed camera 8; the second target 24, equipped with a mark 25, is located at the same level as opening 22 of the first target 21. The auxiliary bracket 23 and subsequently, the high-speed camera 8 are then mounted on the stand 9 with the possibility of adjusting both height and angle. The setting of the optical axis of the measurement is concluded when the light beam 26 from the rectification light source 18, passes through opening 22, in the first target 21, and leaves a trail in the mark 25 of the second target 24. On stand 9, the auxiliary bracket 23 is replaced by a high-speed camera 8, whose optical axis is thus set up in line with the optical measurement axis.

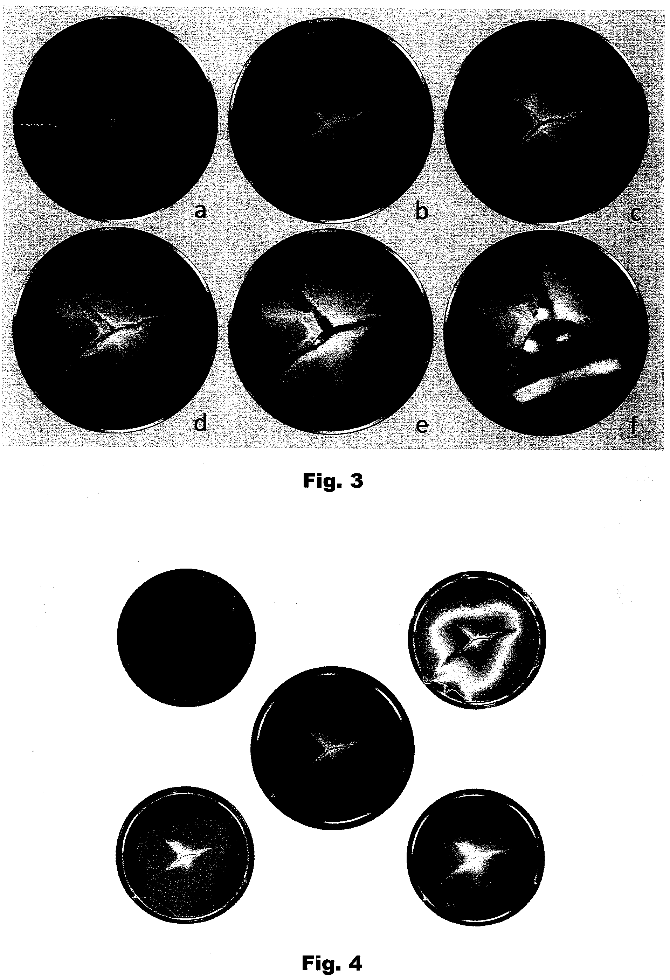

With a view to the large volume of data transmitted during the test, the high-speed camera's 8 activities (starting and stopping imaging) are synchronised with the movement of the impact/drop hammer 3. The external optical gates or the synchronising signal from its own measuring device can be advantageously used for synchronisation purposes. The high-speed camera's 8 recordings include individual images that provide a visual description of the testing, or respectively, a description/depiction of the destruction of the tested body 2 /crack propagation through time. Fig. 3 depicts the subsidiary stages of crack origination and propagation in the course of the test. Figs. 3a to 3f illustrate the initiation of cracks and their propagation right up to total destruction of the tested body 2. Scanning with a high-speed camera 8 system is very demanding on the "lighting" of the scenes. Despite additionally installed light sources, and particularly under extremely high-speed scanning, there may not be sufficiently intense light.

In such cases, the captured images are not of sufficiently good quality, and it is necessary to modify them by means of subsequent post-processing. The task of post-processing in general is to adjust the brightness, contrast, and gamma curve - and possibly, other parameters so that these generally underexposed images have a better explanatory power. Another significant improvement in the informative capabilities of visualisations during testing is enabled by means of converting black-and-white images into fake/false (pseudo colours) with different backgrounds (see Fig. 4).

As is apparent from a comparison of Figs. 3 and 4, the explanatory power of the processed images converted into "wrong" colours is significantly higher than monochrome/greyscale images. This solution highlights the cracks and simplifies the evaluation of the entire test - as is apparent in the appended drawings.

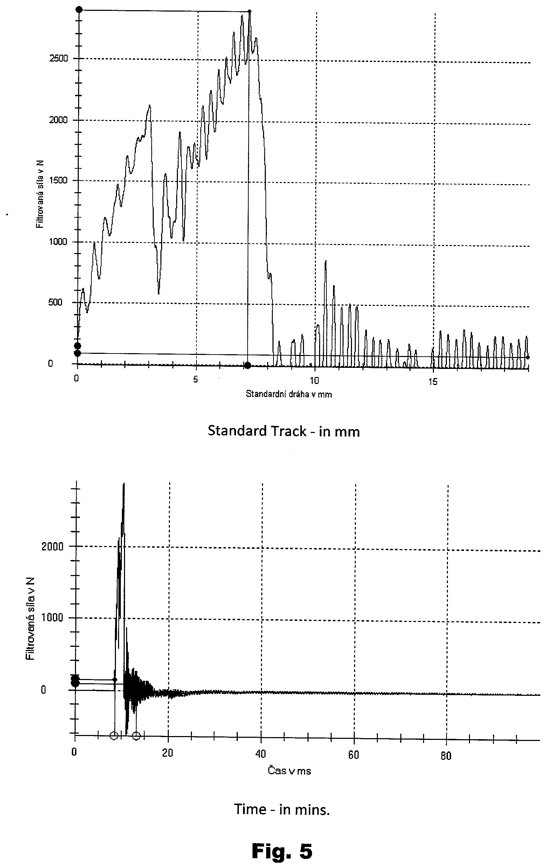

The actual impact test is instrumented, and provides a record of the effective impact/drop hammer 3 force, depending on the time or, as the case may be, displacement (Fig. 5). The inter-penetration of test records and scanned image recordings is then assigned the force of the impact on individual images, which is enabled by the special post-processing procedure.

## Claims

1. A device for sensing the course of deformation in the course of impact tests, equipped by a measuring head (1) where a tested body (2) shall be fixed to the upper surface thereof above a vertical central channel (1a) of the measuring head (1), in the area of impact of an impact/drop hammer (3); said device is **characterised in that** it further comprises:
illumination channels (5) which are located in the walls of the measuring head (1) and under the upper surface of the measuring head (1), and which are directed toward the central channel (1a), and wherein light sources (4) or light-guides from external light sources are arranged;
an observation channel (1b) which enters in the central channel (1a) into the illuminated space so that an angle (α) is formed between the axis of the observation channel (1b) and the axis of the central channel (1a)
and, wherein in the space under the illumination channels (5) against an outlet of the observation channel (1b) into the central channel (1a) an obliquely placed mirror (7) is located, the upper reflective surface of which is oriented such that an axis perpendicular to such reflective surface forms an angle with the axis of the observation channel (1b) and the axis of the central channel (1a) which correspond to half of said angle (α);
a high-speed camera (8) mounted outside the measuring head (1) on a stand (9) along the axis of the observation channel (1b), where the said high-speed camera (8) is configured for scanning purposes.

2. The device according to claim 1, **characterised in that** a transparent protective shield (10) is mounted above the mirror (7) in the cavity of the central channel (1a).

3. The device according to claim 1, **characterised in that** it contains a holder (14) for the mirror (7) mounted on a support rod (16) with adjustment elements (17) as means for positioning the mirror (7), in particular for the displacement of the mirror (7) in accordance with the axial direction of the observation channel (1b) and rotation of the mirror (7) around the axis of the observation channel (1b).

4. The device according to claim 2, **characterised in that** the measuring head (1) is further provided with an inspection opening (6) for cleaning the space above the protective shield (10).

5. The device according to claim 1, **characterised in that** it is supplemented by a rectification system for setting up of the optical axis of the high-speed camera (8) into the axis of the observation channel (1b), whereby the rectification system is formed by the rectifying light source (18), with its bracket (19), for temporary insertion into the cavity of the observation channel (1b) and an auxiliary bracket (23) for temporary attachment to a stand (9) instead of the high-speed camera (8), wherein this auxiliary bracket (23) contains three-axis head for rotating and tilting; and a pair of targets (21, 24) are mounted on the auxiliary bracket; wherein the first target (21) at the proximal end of the auxiliary bracket (23) is equipped by an opening (22) at a height (h), corresponding to the height of the optical axis of the high speed camera (8), whereas the second target (24) is placed at the distal end of the auxiliary bracket (23) and equipped by the mark (25) at a height (h), corresponding to the height of the optical axis of the high-speed camera (8).

## Patentansprüche

1. Vorrichtung zum Scannen der Entwicklung von Deformationen während Schlagprüfungen, die mit einem Messkopf (1) ausgestattet ist, an dessen Oberseite oberhalb eines vertikalen Zentralkanals (1a) des Messkopfes (1) im Aufschlagbereich eines Schlag-/Fallhammers (3) ein Prüfkörper (2) befestigt ist; die Vorrichtung ist **dadurch gekennzeichnet, dass** sie ferner umfasst:
Beleuchtungskanäle (5), die sich in den Wänden des Messkopfes (1) und unter der Oberseite des Messkopfes (1) befinden und die dem zentralen Kanal (1a) zugewandt sind, und in denen sich Lichtquellen (4) oder Lichtleiter von externen Lichtquellen befinden;
einen Beobachtungskanal (1b), der in den Zentralkanal (1a) in den beleuchteten Raum eintritt, so dass ein Winkel (α) zwischen der Achse des Beobachtungskanals (1b) und der Achse des Zentralkanals (1a) gebildet ist;
und bei dem in dem Raum unterhalb den Beleuchtungskanäle (5) gegenüber einem Austritt des Beobachtungskanals (1b) in dem Zentralkanal (1a) ein schräg angeordneter Spiegel (7) angeordnet ist, dessen obere reflektierende Fläche so ausgerichtet ist, dass die zu dieser reflektierenden Fläche senkrecht stehende Achse des Beobachtungskanals (1b) und der Achse des Zentralkanals (1a) einen Winkel bildet, der der Hälfte des genannten Winkels (α) entspricht;
eine Hochgeschwindigkeitskamera (8), die außerhalb des Messkopfes (1) auf einem Ständer (9) entlang der Achse des Beobachtungskanals (1b) angebracht ist, wobei die Hochgeschwindigkeitskamera (8) für die Erfassung ausgelegt ist.

2. Vorrichtung nach Anspruch 1, **dadurch gekennzeichnet, dass** oberhalb des Spiegels (7) im Hohlraum des Zentralkanals (1a) eine transparente Schutzscheibe (10) angebracht ist.

3. Vorrichtung nach Anspruch 1, **dadurch gekennzeichnet, dass** sie eine an einer Haltestange (16) montierte Halterung (14) für den Spiegel (7) mit Verstell-elementen (17) als Mittel zur Positionierung des Spiegels (7), insbesondere zur Bewegung des Spiegels (7) entsprechend der Achsrichtung des Beobachtungskanals (1b) und zum Drehen des Spiegels (7) um die Achse des Beobachtungskanals (1b), umfasst.

4. Vorrichtung nach Anspruch 2, **dadurch gekennzeichnet, dass** der Messkopf (1) ferner mit einer Inspektionsöffnung (6) zur Reinigung des Bereichs oberhalb des Schutzschildes (10) versehen ist.

5. Vorrichtung nach Anspruch 1, **dadurch gekennzeichnet, dass** sie durch ein Gleichrichtsystem zur Einstellung der optischen Achse der Hochgeschwindigkeitskamera (8) in die Achse des Beobachtungskanals (1b) ergänzt wird, wobei das Gleichrichtsystem durch die gleichrichtende Lichtquelle (18) gebildet ist, mit ihrer Halterung (19) zum vorübergehenden Einsetzen in den Hohlraum des Beobachtungskanals (1b) und eine Hilfshalterung (23) zur vorübergehenden Befestigung an einem Stativ (9) anstelle der Hochgeschwindigkeitskamera (8), wobei diese Hilfshalterung (23) einen Drei-Achsen-Kopf zum Drehen und Neigen umfasst; und ein Paar von Zielscheiben (21, 24) die an der Hilfshalterung (23) angebracht sind; wobei die erste Zielscheibe (21) am proximalen Ende der Hilfshalterung (23) mit einer Öffnung (22) in einer Höhe (h) versehen ist, die der Höhe der optischen Achse der Hochgeschwindigkeitskamera (8) entspricht, während die zweite Zielscheibe (24) am distalen Ende der Hilfshalterung (23) angeordnet und mit der Markierung (25) in einer Höhe (h) versehen ist, die der Höhe der optischen Achse der Hochgeschwindigkeitskamera (8) entspricht.

## Revendications

1. Appareil de balayage du développement de déformations pendant des essais de choc, équipé d'une tête de mesure (1), sur la surface supérieure de laquelle le corps testé (2) est fixé au-dessus du canal central vertical (1a) de la tête de mesure (1), dans la zone d'impact du marteau d'impact/de chute (3); le dispositif cité est **caractérisé en ce qu'**il comprend en outre:
des canaux d'éclairage (5) qui sont situés dans les parois de la tête de mesure (1) et sous la surface supérieure de la tête de mesure (1), et qui font face au canal central (1a), et dans lesquels sont disposées des sources lumineuses (4) ou des guides de lumière provenant de sources lumineuses externes;
un canal d'observation (1b) qui débouche dans le canal central (1a) dans l'espace éclairé de telle sorte qu'un angle (α) soit formé entre l'axe du canal d'observation (1b) et l'axe du canal central (1a);
et dans lequel dans l'espace sous les canaux d'éclairage (5) opposé à la sortie du canal d'observation (1b) dans le canal central (1a) est placé un miroir (7) positionné obliquement, dont la surface réfléchissante supérieure est orientée de telle sorte que l'axe perpendiculaire à cette surface réfléchissante forme un angle avec l'axe du canal d'observation (1b) et avec l'axe du canal central (1a) correspondant à la moitié angle (α) nommé;
une caméra à grande vitesse (8) montée à l'extérieur de la tête de mesure (1) sur un statif (9) le long de l'axe du canal d'observation (1b), la caméra à grande vitesse nommé (8) étant configuré à des fins de numérisation.

2. Appareil selon la revendication 1, **caractérisé en ce qu'**un écran protecteur transparent (10) est monté au-dessus du miroir (7) dans la cavité du canal central (1a).

3. Appareil selon la revendication 1, **caractérisé en ce qu'**il comprend un porteur (14) pour le miroir (7) monté sur une tige (16) de support avec des éléments de réglage (17) comme moyens de positionnement du miroir (7), notamment pour déplacer le miroir (7) selon la direction axiale du canal d'observation (1b) et faire tourner le miroir (7) autour de l'axe du canal d'observation (1b).

4. Appareil selon la revendication 2, **caractérisé en ce que** la tête de mesure (1) est en outre pourvue d'une ouverture d'inspection (6) pour nettoyer l'espace au-dessus d''écran protecteur transparent (10).

5. Appareil selon la revendication 1, **caractérisé en ce qu'**il est complété par un système d'alignement pour ajuster l'axe optique de la caméra à grande vitesse (8) à l'axe du canal d'observation (1b), le système d'alignement étant formé par une source lumineuse d'alignement (18) avec son support (19) pour insertion temporaire dans la cavité du canal d'observation (1b) et un support auxiliaire (23) pour fixation temporaire au statif (9) au lieu d'une caméra à grande vitesse (8), dite support auxiliaire (23) comprenant une tête à trois axes pour rotation et inclination; et la paire de cibles (21, 24) est montée sur la support auxiliaire (23); dans lequel la première cible (21) à l'extrémité proximale du support auxiliaire (23) est pourvue d'une ouverture (22) à une hauteur (h) correspondant à la hauteur de l'axe optique de la caméra à grande vitesse (8), tandis que la seconde cible (24) est située à l'extrémité distale du support auxiliaire (23) et est pourvue d'une marque (25) à une hauteur (h) correspondant à la hauteur de l'axe optique de la caméra à grande vitesse (8).
